# EUROPÄISCHE PATENTANMELDUNG

(11) **EP 4 656 876 A1**
(43) Veröffentlichungstag der Anmeldung: **03.12.2025**
(21) Anmeldenummer: 24178396.8
(22) Anmeldetag: 28.05.2024
(51) Int. Cl.: F03D 13/10, F03D 13/20

(54) **IM TURMINNEREN EINES TURMS EINER WINDENERGIEANLAGE AUFWÄRTS VERLAUFENDE VER-SORGUNGSSTRUKTUR UND VERFAHREN ZUM ERRICHTEN EINER SOLCHEN**

(71) Anmelder: Bettels Betonfertigteile GmbH, 26723 Emden (DE)
(72) Erfinder: Die Erfindernennung liegt noch nicht vor
(74) Vertreter: Raffay & Fleck

(57) **Zusammenfassung**

Eine im Innern eines Turmes (T) einer Windenergieanlage installierte Versorgungsstruktur (1) weist eine Einbaustruktur (10) auf, die über eine, insbesondere ring- oder teilringförmig gebildeten, Abstützstruktur zum Abstützen an oder auf einem vertikal erhöht gelegenen Turmwandabschnitt verfügt. Die Einbaustruktur (10) umfasst eine Ankerstruktur (3). Die Versorgungsstruktur (1) umfasst ferner eine Trägerstruktur (2), die an der Ankerstruktur (3) tragend aufgehängt ist und sich von der Einbaustruktur (10) im Wesentlichen vertikal nach unten erstreckt. Weiterhin umfasst die Versorgungsstruktur (1) an der Trägerstruktur (2) festgelegten Anbauelementen (4).

Es wird zudem ein Verfahren zum Einrüsten eines Turms einer Windenergieanlage mit einer im Turminneren aufwärts verlaufenden solchen Versorgungsstruktur (1) offenbart.

## Beschreibung

Die Erfindung betrifft Türme von Windenergieanlagen und insbesondere darin angeordnete Versorgungsstrukturen. Sie betrifft ferner ein Verfahren zum Errichten einer solchen Versorgungsstruktur, bzw. zum Einrüsten eines Turms einer Windenergieanlage mit einer derartigen Versorgungsstruktur.

Um die in größeren Höhenlagen zuverlässiger, gleichmäßiger und kräftiger fließenden Windströmungen zu erreichen und dort die den jeweils Generator antreibenden Rotoren zu positionieren, werden Windenergieanlagen mit hochaufragenden Türmen errichtet, auf denen zuoberst sogenannte Gondeln angeordnet sind, in denen die Generatoren angeordnet sind und an denen die um eine Horizontalachse rotierenden, von der Windströmung angetriebenen Rotoren umlaufen. Bei modernen Windenergieanlagen sind derartige Türme ohne weiteres weit über 100 m hoch, ragen bis zu 180 m und höher auf. Im Innern der hohl ausgebildeten Türme gilt es nun, eine Verbindung zwischen der an der Turmspitze angeordneten Gondel und dem Turmboden zu schaffen, um entlang dieser Verbindung Versorgungsleitungen und andere Infrastruktur vorzusehen. So gilt es hier zum Beispiel Leitungen für eine Energieversorgung von Einheiten in der Gondel emporzuführen, Stromleitungen von dem Generator in Richtung des Turmbodens zu verlegen, aber auch einen Zugang zu ermöglichen, über den Bedien- und Wartungspersonal im Innern des Turms aufsteigen bzw. auffahren kann bis in Richtung der Gondel oder aber auch zu in Zwischenabschnitten angeordneten Zwischenplattformen.

Für diese Zwecke werden Türme von Windenergieanlagen mit sogenannten Versorgungsstrukturen eingerüstet, die im Turminneren im wesentlichen vertikal aufwärts verlaufen. An solchen Versorgungsstrukturen sind typischerweise Leiterelemente festgelegt, über die der Turm der Höhe erklommen werden kann, an denen aber auch vielfach Lifteinrichtungen festgelegt sind, mit denen Lasten und Personen entlang der Versorgungstruktur aufwärts verfrachtet werden können. Weiterhin sind an diesen Versorgungsstrukturen häufig Kabelführungen, insbesondere für elektrische Kabel, aber gegebenenfalls auch für Hydraulikleitungen oder dergleichen, vorgesehen.

Türme von Windenergieanlagen werden, insbesondere, wenn diese an Land errichtet werden, am Aufstellungsort aus vorproduzierten Turmsegmenten errichtet. Bekannt sind hierbei Türme aus Beton bzw. Stahlbeton, die aus einzelnen, aufeinander aufgesetzten und miteinander zu verbindenden Betonsegmenten errichtet werden. Ebenso sind auch Stahltürme bekannt, die im Feld aus herangeschafft und beim Errichten miteinander verbundenen, zum Beispiel über Flansche verschraubten oder auch verschweißten, Stahlsegmenten errichtet werden. Es existieren auch sogenannte Hybridtürme, die eine Beton-, bzw. Stahlbetonbauweise mit einer Stahlbauweise verbinden, häufig mit einem unteren Turmabschnitt aus Beton beziehungslose Stahlbeton und einem darauf aufgesetzten, oberen Stahlturmabschnitt.

Wenn ein derartiger Turm im Feld errichtet wird bzw. errichtet ist, gilt es die Versorgungsstruktur im Innern des Turmes anzuordnen. Hierfür sind verschiedene Vorgehensweisen bekannt. So ist zum Beispiel in der DE 20 2011 106 727 U1 ein Aufbau einer Versorgungsstruktur aus und mit tragenden Rohrabschnitten beschrieben, wobei dieser Aufbau durch Aufstellen der Rohrabschnitte ausgehend von dem Turmboden, Anheben eines Abschnittes und darunter Stellen eines weiteren Abschnittes und Verbinden mit dem angehobenen Abschnitt usw. erfolgt, also aufwärts anwachsend von unten her. Die fertige Versorgungsstruktur lastet dabei auf dem Turmboden auf, wird zudem abschließend an der Turminnenwand abgestützt.

In der DE 10 2017 124 615 A1 sind zwei mögliche und alternative Vorgehensweisen für das Einrüsten eines Windenergieanlagenturms mit einer Versorgungsstruktur beschrieben. In einer ersten möglichen Vorgehensweise ist vorgesehen, dass einzelne Längsabschnitte der Versorgungsstruktur in den ringförmigen Turmsegmenten jeweils an der Innenwand vormontiert und zunächst in eine Einbaulage abgeklappt sind. Die Turmsegmente werden dann aufeinandergestellt errichtet und die vormontierten Längsabschnitte der Versorgungsstruktur werden aus der Einbaulage in eine Einsatzlage ausgeklappt, stoßen dabei jeweils endseitig aneinander an und werden miteinander verbunden. Eine zweite, in dieser Druckschrift offenbarte Vorgehensweise sieht vor, dass eine Versorgungsstruktur aus einzelnen Längsabschnitten vormontiert ist, die Längsabschnitte jeweils miteinander gelenkig verbunden sind und dass dieses vormontierte Paket ziehharmonikaartig zusammengelegt ist. Dieses vormontierte Paket wird auf dem Turmboden platziert, zum Beispiel vor dem Montieren bzw. Anordnen der Turmsegmente auf einer Fundamentplatte abgelegt und wird anschließend, wenn der Turm über den Abschnitt, über den die Versorgungstruktur nach oben ragen soll, errichtet ist, durch Anheben eines obersten Segments aufwärts gezogen, entfaltet sich und wird dann oben am Turm aufgehängt und dort fixiert. Die so gebildete Versorgungsstruktur wird in beiden Fällen jeweils an der Turmwand verankert, über die eine Lastabführung erfolgt.

Die bekannten Vorgehensweisen, eine Versorgungsstruktur in einem Turm einer Windenergieanlage zu errichten, bzw. den Turm einer Windenergieanlage mit einer solchen Versorgungsstruktur einzurüsten, weisen Schwierigkeiten und Nachteile auf. So ist bei einem Vorgehen, wie es in der DE 20 2011 106 727 U1 beschrieben ist, ein massiver Rohrstapel abschnittweise anzuheben, wozu auf der Baustelle ein Kran erforderlich ist. Ein solcher Kran, der eine entsprechende Auslegerhöhe von weit über 100 m aufweist, muss für ein solches Projekt unter hohen Kosten angemietet werden, bzw. ist im Einsatz teuer. Entsprechend ist man bestrebt, die Einsatzzeiten derartiger Kräne auf der Baustelle so gering wie möglich zu halten. Zudem ist die Versorgungstruktur so zu gestalten, dass sie die eigene Last und zusätzlich aufzunehmende Lasten sicher abführt in Richtung des Turmbodens, der ebenso lasttragend an der Stelle der auflastenden Versorgungstruktur zu gestalten ist. Die Versorgungsstruktur selbst lastet auf dem Turmboden auf und ist entsprechend massiv auszuführen.

Ein Vorausstatten der Turmsegmente mit auf der jeweiligen Innenwand festgelegten Längsabschnitten der Versorgungstruktur, wie es die DE 10 2017 124 615 A1 vorschlägt, ist aufwendig und verkompliziert die Herstellung der Turmsegmente, erfordert zudem ein sehr präzises Aufeinandersetzen der Turmsegmente in ihrer jeweiligen Umfangsausrichtung. Ein Vorgehen gemäß dem zweiten Lösungsansatz der DE 10 2017 124 615 A1, bei dem ein ziehharmonikaartig zusammengefaltetes Paket der aus den vormontierten Längsabschnitten gebildeten Versorgungsstruktur in das Turminnere einzubringen und anschließend anzuheben ist, ist ebenfalls aufwendig, da - gerade bei großen Höhen der zu errichtenden Türme - ein entsprechendes ziehharmonikaartig zusammengefaltetes Paket große Abmessungen, insbesondere eine große Stapelhöhe, mit sich bringt und zugleich massiv ist. Es ist entsprechend nur schwer zu bewegen und kann nicht ohne weiteres zum Beispiel durch die Öffnung einer normalen Versorgungstür in das Turminnere verbracht werden. Zudem muss auch dieses Paket mit einem auf der Baustelle vorzuhaltenden Kran angehoben werden, was die vorstehend bereits erläuterten hohen Kosten mit sich bringt. Die Versorgungsstruktur selbst ist zudem an einer großen Zahl von Verankerungspunkten mit der Turmwand zu verbinden und an letzterer aufzuhängen. Eine solche Aufhängung ist aufwendig in der Realisierung und kann zu Schwächungen der Turmwand führen, wenn dort Verankerungspunkte vorzusehen sind, so dass die Turmwand überdimensioniert zu planen ist.

Diese vorstehend aufgezeigten Nachteile des bekannten Standes der Technik zu überwinden und eine entsprechend verbesserte Versorgungstruktur im Innern eines Turmes einer Windenergieanlage anzugeben sowie ein verbessertes, kostengünstig anzuwendendes Verfahren für das Einrüsten eines Turms einer Windenergieanlage mit einer im Turminnern aufwärtsverlaufenden Versorgungsstruktur bereitzustellen, ist Aufgabe der vorliegenden Erfindung.

Diese Aufgabe wird dabei gelöst durch ein eine Versorgungstruktur in einem Turm einer Windenergieanlage mit den Merkmalen des Patentanspruchs 1. Vorteilhafte Ausführungsvarianten und Weiterbildungen einer solchen Versorgungsstruktur sind in den abhängigen Ansprüchen 2 bis 6 bezeichnet. Eine weitere Lösung der Aufgabe besteht in einem Turm einer Windenergieanlage mit einer darin installierten erfindungsgemäßen Versorgungstruktur. Schließlich besteht ein weiterer Aspekt der Erfindung in einem Verfahren zum Einrüsten eines Turms einer Windenergieanlage mit einer Versorgungsstruktur mit den Merkmalen des Patentanspruchs 8. Vorteilhafte Ausführungsvarianten und Weiterbildungen eines solchen Verfahrens sind in den abhängigen Ansprüchen 9 bis 17 bezeichnet.

In einem Aspekt wird mit der Erfindung eine im Innern eines Turmes einer Windenergieanlage installierte Versorgungsstruktur angegeben. Diese weist erfindungsgemäß eine Einbaustruktur auf. Diese Einbaustruktur hat eine Abstützstruktur zum Abstützen an oder auf einem vertikal erhöht gelegenen Turmwandabschnitt. Diese Einbaustruktur kann insbesondere ring- oder teilringförmig gebildet sein. Die Einbaustruktur hat eine Ankerstruktur, z.B. eine Flanschstruktur. Die Versorgungsstruktur weist dann weiterhin eine an der Ankerstruktur tragend aufgehängte Trägerstruktur auf, die sich von der Einbaustruktur im Wesentlichen vertikal nach unten erstreckt. Weiterhin weist die Versorgungsstruktur an der Trägerstruktur festgelegte Anbauelemente auf.

Das Besondere an dieser erfindungsgemäßen Versorgungsstruktur ist nun, dass ihre Trägerstruktur tragend an der erhöht, insbesondere im Bereich eines vertikal oberen Endabschnittes der Versorgungsstruktur, positionierten und dort mit dem Turm, genauer dessen Wand, tragend verbundenen Einbaustruktur aufgehängt ist. Die Trägerstruktur ist entsprechend massiv und lasttragend gebildet, kann insbesondere rohr- oder säulenförmig ausgeformt sein. Auf diese Weise ist weder eine massive säulenartige Struktur auf dem Turmboden abstützend aufzusetzen und nach oben zu führen, noch müssen an der Turmwand an vielen Höhenpositionen Abschnitte der Versorgungsstruktur lasttragend aufgehängt werden. Die erfindungsgemäße Versorgungsstruktur lastet gerade nicht auf dem Turmboden auf, sondern ist allein an der Einbaustruktur auf-, bzw. von dieser tragend abgehängt. Allein über die Einbaustruktur wird die daran aufgehängte Last dann in die Turmwand eingeleitet, dies über die Abstützstruktur, z.B. über eine an der Turmwand angebrachte Konsole oder aber auch über eine als Ringsegment der Turmwand direkt ausgebildete Abstützstruktur.

Mit Vorteil können die Anbauelemente Leiterabschnitte umfassen, die sich in im Wesentlichen vertikaler Richtung an der Trägerstruktur entlang erstrecken. Solche Leiterabschnitte können z.B. von Wartungs- oder Installationspersonal genutzt werden, um im Turminneren auf höhere Ebenen aufzusteigen. Es können aber auch weitere Installationen an einer aus solchen Leiterabschnitten gebildeten Leiterstruktur angebracht werden. An der Trägerstruktur können aber auch andere Installationen direkt festgelegt sein, wie z.B. Halter und Führungen für elektrische Kabel, für Hydraulikleitungen oder dergleichen Medienführungen.

Die erfindungsgemäße Versorgungsstruktur kann sich mit Vorteil in einem Turm einer Windenergieanlage, in dem sie verbaut ist, mit Vorteil hängend bis in etwa zum Boden des Turmes der Windenergieanlage erstrecken, dies jedoch, ohne sich auf dem Turmboden lasttragend abzustützen. So kann die Versorgungsstruktur vom Turmboden aus gut erreicht werden, um entlang dieser Versorgungsstruktur Menschen, Material oder Medien auf- oder abwärts zu führen.

Um insbesondere einer möglichen Torsions- oder Kippneigung der vertikal aufwärts geführten Trägerstruktur vorzubeugen bzw. entgegenzuwirken kann die Trägerstruktur mit Stützelementen verbunden sein, die einem seitlichen Abstützen an einer Turminnenwand dienen. Diese Stützelemente stellen dabei jedoch keine lasttragenden Aufhängungen dar. Die lasttragende Aufhängung der Trägerstruktur ist allein über die Einbaustruktur und die Verbindung der Trägerstruktur mit der Ankerstruktur gegeben.

Die erfindungsgemäße Versorgungsstruktur kann insbesondere aus miteinander in einer aufwärts verlaufenden Längsrichtung verbundenen Längsabschnitten gebildet sein. Dies ermöglicht insbesondere einen vereinfachten Einbau der, in der Regel über mehrere zig Meter, teils über 100 Meter aufwärts führenden Versorgungsstruktur im Turminneren.

Die erfindungsgemäße Versorgungsstruktur kann mit Vorteil auch ein an der Trägerstruktur oder an den Anbauelementen angeordnetes Liftsystem (LS) umfassen, mit dem Menschen oder Lasten angetrieben in vertikaler Richtung des Turms auf und ab befördert werden können.

Ein weiterer Aspekt der Erfindung besteht in einem Turm einer Windenergieanlage der in seinem mit einer wie vorstehend beschriebenen, erfindungsgemäßen Versorgungsstruktur versehen ist. Bei diesem Turm kann es sich insbesondere um einen in Hybridbauweise aus einem unteren Betonturmabschnitt und einem oberen Stahlturmabschnitt errichteten Turm handeln. Dabei kann dann die erfindungsgemäße Versorgungsstruktur sich in vertikaler Richtung entlang des Betonturmabschnitts erstrecken mit an einem vertikal oberen Abschlussende des Betonabschnitts festgelegter Einbaustruktur.

Mit der Erfindung wird weiterhin ein Verfahren zum Einrüsten eines Turms einer Windenergieanlage mit einer im Turminneren jedenfalls über den Turmabschnitt von einem Turmboden her aufwärts verlaufenden erfindungsgemäßen Versorgungsstruktur angegeben. Bei diesem Verfahren wird die Versorgungsstruktur aus miteinander in einer aufwärts verlaufenden Längsrichtung verbundenen Längsabschnitten gebildet. Dabei wird zunächst an einer Oberseite eines aus einer Mehrzahl von Turmsegmenten gebildeten Turmabschnitts, bis zu dem die Versorgungstruktur zu errichten ist, eine Einbaustruktur angeordnet, die wenigstens ein Seilzugsystem für ein Zugseil, wie z.B. wenigstens eine Umlenkrolle, aufweist. In bzw. an dieser Einbaustruktur wird weiterhin ein Zugseil derart mit dem Seilzugsystem gekoppelt, z.B. über die wenigstens eine Umlenkrolle umgelenkt gelegt, angeordnet, dass es mit einem ersten seiner beiden einander gegenüberliegenden Enden mit einer Seilwinde verbunden oder mit einer Seilwinde verbindbar ist und dass es mit dem zweiten seiner beiden Enden bei montierter Einbaustruktur in Richtung des Turmbodens und bis zu diesem reichend herabhängt. Das Zugseil kann dabei an der Einbaustruktur bereits vormontiert und mit dem Seilzugsystem gekoppelt sein, wenn die Einbaustruktur auf der Oberseite des Turmabschnitts auf, bzw. dort eingesetzt wird. Es kann aber auch zunächst die Einbaustruktur angeordnet und fixiert und anschließend das Zugseil dort festgelegt und mit dem Seilzugsystem gekoppelt werden. Dieser Schritt des Anordnens der Einbaustruktur wird typischerweise unter Zuhilfenahme eines Krans unternommen, wobei hierfür derjenige Kran verwendet werden kann und typischerweise verwendet wird, der auch zum Anheben der Turmsegmente für das Errichten des Turms der Windenergieanlage im Einsatz ist, der also zu diesem Zeitpunkt ohnedies auf der Baustelle benötigt wird. Sofern der Turmabschnitt, in dem später die Versorgungsstruktur zu errichten ist, nicht der gesamte Turm ist, sondern weitere Turmsegmente im Anschluss aufzusetzen und festzulegen sind, kann an dieser Stelle auch zunächst der Fortbau des Turms vollzogen werden, dies zum Beispiel weiterhin unter Einsatz des ohnedies auf der Baustelle vorhandenen Krans. Insbesondere dann, wenn der Turm der Windenergieanlage ein in Hybridbauweise errichteter Turm ist, ein Turm mit einem unteren Turmabschnitt aus Stahlbetonteilen und einem oberen, über einen Adapterabschnitt angesetzten Stahlturmabschnitt, kann zum Beispiel die Einbaustruktur im Bereich des Adapterabschnitts vorgesehen sein, sodass die Versorgungsstruktur zunächst einmal die Höhe des in Stahlbetonbauweise errichteten Turmabschnitts überspannt. Dort kann sich dann eine weitere Versorgungstruktur anschließen, die in anderer Bauweise in dem Stahlturmabschnitt eingebracht ist.

Wenn nun die Versorgungsstruktur eingebaut werden soll, ist der Einsatz eines Krans nicht erforderlich. Denn hier kommt eine Seilwinde zum Einsatz, mit der erfindungsgemäß das erste der beiden Enden des Zugseils verbunden ist oder wird. Sodann wird ein einzelnes und losgelöstes erstes Segment, ein erster und in der fertigen Versorgungstruktur später oberster Längsabschnitt der Versorgungstruktur, in das Turminnere eingebracht und wird mit einem ersten, in der späteren Einbaulage oberen Ende mit dem zweiten der beiden Enden des Zugseils verbunden. Dies kann in bekannter Weise zum Beispiel durch Einsatz von Schekeln oder dergleichen erfolgen. In einem nächsten Schritt wird der erste Längsabschnitt der Versorgungstruktur durch Aufwickeln des ersten Endes des Zugseils auf die Seilwinde soweit aufwärts gezogen, dass ein zweites Ende des ersten Längsabschnitts der Versorgungstruktur von dem Turmboden her weiterhin zugänglich ist, insbesondere noch auf dem Turmboden aufliegt. Anschließend wird bodenseitig ein weiterer Längsabschnitt der Versorgungstruktur in das Turminnere eingebracht und wird mit einem ersten, in Einbaulage später oberen Ende mit dem zweiten Ende des ersten Längsabschnitts der Versorgungstruktur gelenkig verbunden. Dies kann zum Beispiel durch einen Verbindungsbolzen geschehen, der in der Verbindung einen Gelenkbolzen ausbildet. Anschließend wird wiederum durch Aufwickeln des ersten Endes des Zugseils auf die Seilwinde der zusammengefügte Abschnitt der beiden Längsabschnitte der Versorgungstruktur angehoben und zwar so weit, dass ein zweites Ende des weiteren, gerade mit dem ersten Längsschnitt verbundenen Längsabschnitts der Versorgungstruktur von dem Turmboden her weiterhin zugänglich ist, idealerweise auf dem Turmboden noch aufliegt. Anschließend wird bodenseitig ein nächster weiterer Längsabschnitt der Versorgungstrukturen in das Turminnere eingebracht und in gleichartiger Weise, mit seinem ersten, in Einbaulage später oberen Ende wie zuvor beschrieben gelenkig mit dem zweiten Ende des zuvor eingebracht Längsabschnitts der Versorgungstruktur verbunden, was wiederum zum Beispiel mit einem Gelenkbolzen erfolgen kann. Im Anschluss wird das erste Ende des Zugseils so weit weiter auf die Seilwinde aufgewickelt, dass dadurch der erste Längsabschnitt der Versorgungstruktur und die daran nun festgelegten weiteren Längsabschnitte soweit angehoben werden, dass ein zweites Ende des zuletzt eingebrachten weiteren Längsabschnitts der Versorgungstruktur von dem Turmboden her weiterhin zugänglich ist, idealerweise auf dem Turmboden noch aufliegt. Diese Vorgehensweise wird nun so lange wiederholt, d. h. es werden so lange weitere Längsabschnitte der Versorgungsstruktur bodenseitig in der Turminnere eingebracht und gelenkig mit dem zweiten Ende des zuletzt angebrachten Längsabschnitts der Versorgungsstruktur verbunden, anschließend die Aneinanderreihung der Längsabschnitte der Versorgungstruktur mit dem zuoberst liegenden ersten Längsschnitt der Versorgungstruktur angehoben, bis der erste Längsabschnitt der Versorgungsstruktur auf einer zu erreichenden Errichtungshöhe liegt, die insbesondere auf Höhe der Einbaustruktur gelegen sein kann, und dabei zugleich ein unterster, dann zuletzt angebrachter Längsabschnitt der Versorgungstruktur fluchtend mit den weiteren Längsabschnitten ausgerichtet und ausgehend vom Turmboden erreichbar ist und

Das wie vorstehend beschriebenen, erfindungsgemäße Vorgehen weist gegenüber den bekannten Vorgehensweisen verschiedene Vorteile auf. So kann durch den Einsatz einer Seilwinde für das Anheben der Versorgungsstruktur, bzw. der einzelnen Längsabschnitte, auf den Einsatz eines von oben her in das Turminnere hineinreichenden Krans verzichtet werden, sodass kostspielige Kranzeiten eingespart werden können. Weiterhin lassen sich die erfindungsgemäß jeweils einzeln in das Turminnere einzubringenden und bereitzustellenden Längsabschnitte der Versorgungstruktur vergleichsweise einfach handhaben und leicht in das Turminnere einbringen, zum Beispiel auch durch eine dort ohnedies vorzusehende Türöffnung einer Versorgungstür. Die Versorgungstruktur muss nicht bereits beim Errichten des Turms auf einer Fundamentplatte abgelegt und der Turm dann mit einzelnen Segmenten darüber errichtet werden. Die Versorgungstruktur mit ihren Längsabschnitten kann insoweit insbesondere unabhängig vom Aufstellen des Turms dann zu der Baustelle verbracht werden, wenn sie dort für den Einbau benötigt wird, bzw. wenn es aus anderen logistisch bedingten Gründen geeignet und passend ist.

Mit Vorteil kann bei dem erfindungsgemäßen Verfahren vorgesehen sein, dass die gelenkig ausgeführten Verbindungen zwischen zwei aneinander befestigten Längsabschnitten der Versorgungsstruktur dann, wenn die beiden Längsabschnitte eine fluchtende Ausrichtung erreicht haben, in einer biegesteifen Verbindung zueinander fixiert werden. Dies kann zum Beispiel durch Anbringen von mit mehreren Schrauben fixierten Verbindungsplatten oder dergleichen erfolgen, wobei dann, wenn eine solche biegesteife Fixierung erfolgt ist, insbesondere auch der Gelenkbolzen, der für die gelenkige Verbindung zuvor eingesetzt worden sein kann, wieder entfernt werden kann. Im Ablauf des Errichtens kann mit Vorteil eine solche biegesteife Fixierung der Verbindungen in einem unteren Abschnitt des Turms erfolgen, dann, wenn diese Verbindung zwischen den beteiligten Längsabschnitten der Versorgungsstruktur nur insoweit angehoben ist, dass die beiden Längsabschnitte fluchtend herabhängen. Hierzu kann zum Beispiel eine Hilfsplattform im Turminnern errichtet sein, die bis in eine entsprechende Höhe reicht, auf der dann ein Monteur oder eine Monteurin Aufstellung nehmen und von dort aus die Fixierungsarbeiten durchführen kann, wenn die zunächst gelenkig ausgeführte Verbindung bis auf die Höhe der Hilfsplattform angehoben ist. Eine solches Plattform kann zum Beispiel in einer Höhe von 4-8 m vom Turmboden aus errichtet und zum Beispiel über ein Gerüst auf dem Turmboden abgestützt sein.

Für die Durchführung des Verfahrens kann die Seilwinde an unterschiedlichen Positionen angeordnet werden. Sie kann z.B. auf oder an der Einbaustruktur angeordnet sein und dort Bestandteil des Seilzugsystems sein. Dies hat den Vorteil, dass beim Errichten der Versorgungsstruktur nur ein Ende des Zugseils in das Turminnere herabhängt und dies stets auch nur bis zu einem vertikal oberen Ende der Struktur. Weitere Seilabschnitte des Zugseils liegen nicht etwa störend im Weg während des Aufbaus der Versorgungsstruktur. Allerdings wird man bei einer solchen Lösung am Ende des Aufbaus der Versorgungsstruktur die Seilwinde, jedenfalls wenn sie keine weiterführende Funktion in der Windenergieanlage übernimmt, abbauen und dem Turm entnehmen, um sie in einem anderen Einsatz weiter zu verwerten. Dazu ist dann wiederum in der Regel ein Kran erforderlich, um die Seilwinde nach oben aus dem Turmbau zu entnehmen.

Alternativ kann die Seilwinde aber auch an anderer Stelle positioniert werden, insbesondere im Bodenbereich. Dorthin kann eine solche Seilwinde auch ohne einen für den Turmbau zu verwendenden Kran mit hohem Ausleger verbracht werden. In einem solchen Fall müssen dann beide Enden des Zugseils zum Boden des Turms herabhängend geführt werden, um das erste Ende des Zugseils mit der Seilwinde oder mit einem daran befestigten Windenseil verbinden zu können. Dies bedingt dann, dass beim Aufbau der Versorgungsstruktur das auf die Seilwinde auflaufende Ende des Zugseils von der Einbaustruktur herabführt und beim Errichten der Versorgungsstruktur auf dieses potentielle Hindernis Rücksicht genommen werden muss. Wenn die Seilwinde auf einem unterhalb der Einbaustruktur gelegenen Niveau platziert wird, ist das an der Einbaustruktur vorzusehende Seilzugsystem mit einer Seilumlenkung, z.B. einer oder mehreren Umlenkrollen, auszuführen. Wenn die Seilwinde im Bodenbereich angeordnet wird, so kann sie mit Vorteil im Innern des Turms angeordnet und an dem Turmboden festgelegt werden.

Wie erwähnt, ist die Seilwinde typischerweise nicht für einen dauerhaften Verbleib in dem Turm vorgesehen, sondern wird nach Abschluss des Errichtens der Versorgungstruktur ebenso entfernt wie auch das Zugseil, sodass diese Komponenten für das Errichten einer weiteren Versorgungstruktur in einem anderen Turm einer Windenergieanlage wiederverwendet oder für einen anderen Einsatz gebraucht werden können. Natürlich kann es aber auch Fälle geben, in denen eine Seilwinde im Innern des Turms auch für den späteren Betrieb gewünscht ist, sodass die Seilwinde dann im Turminnern verbleiben, bzw. die Turminnern ohnedies vorgesehene Seilwinde für die Durchführung des erfindungsgemäßen Verfahrens genutzt werden kann.

Wie bereits erwähnt, können bei der Durchführung des erfindungsgemäßen Verfahrens mit Vorteil die Längsabschnitte der Versorgungstruktur einzeln und nacheinander durch eine Türöffnung im Bereich des Turmboden in den Turm eingebracht werden, zum Beispiel getragen an dem Ausleger eines Teleskopladers oder eines ähnlichen Arbeitsfahrzeugs.

Für eine weitergehende Stabilisierung der Versorgungstruktur nach dem Zusammenbau aus den einzelnen Längsabschnitten kann die Versorgungsstruktur nach dem finalen Anheben mit ihrem oberen Ende an einer Anschlagstruktur an dem oberen Ende des Turmabschnitts dreh- und kippfest verbunden werden. Hierdurch wird verhindert, dass die Versorgungstruktur im späteren Gebrauch um ihre Längsachse rotiert oder sich verdrillt.

Für eine zusätzliche Stabilisierung kann die fertig zusammengesetzte Versorgungstruktur, wenn sie auf ihre finale Position angehoben ist, mit an den Innenwänden der Turmabschnitte festgelegten Stützstreben an der Turminnenwand abgestützt werden. Derartige Stützstreben können zum Beispiel mit in den Turmwandsegmenten vorinstallierten Ankerelementen verbunden werden, um so eine feste Verbindung zu schaffen.

Die Versorgungstruktur, die mit dem erfindungsgemäßen Verfahren errichtet wird, kann insbesondere ein, vorzugsweise rohrförmige gebildetes, Trägerelement und ein mit diesem Trägerelement verbundenes Leiterelement umfassen, wobei die Längsabschnitte jeweils einen Trägerelementabschnitt sowie eine Leiterelementabschnitt aufweisen. Auf diese Weise kann mit der Versorgungstruktur eine aufwärtsgerichtete Leiter ausgebildet werden, über die der Turmabschnitt der Höhe nach erklommen werden kann. Eine solche Leiterstruktur kann aber auch in der an sich bekannten Weise dazu dienen, daran zum Beispiel eine Lifteinrichtung anzuordnen und festzulegen, mit der Personen und/oder Lasten motorisch angehoben werden können.

Besteht die Versorgungstruktur aus Trägerelementabschnitten und Leiterelementabschnitten, so kann diese mit dem erfindungsgemäßen Verfahren bei einer möglichen Vorgehensweise zunächst in einer solchen Weise errichtet werden, dass die Längsabschnitte derart miteinander verbunden werden, dass deren Leiterabschnitte in Richtung einer zu diesen näher gelegenen, benachbarten Turminnenwand weisen und dass die Trägerelementabschnitte entsprechend dem Turminnern zugewandt sind. Nach Fertigstellung der aus den miteinander verbundenen Längsabschnitten gebildeten Versorgungsstruktur und nach dem finalen Anheben des oberen Endes des ersten Längsabschnitts der Versorgungstruktur auf eine Einbaulage wird die Versorgungstruktur bei dieser Vorgehensweise dann um 180° um ihr Längsachse gedreht und anschließend in dieser Position fixiert. Dieses Vorgehen ist vor insbesondere dann sinnvoll, wenn die Leiterabschnitte an den Trägerelementabschnitten passgenau angeordnet sind, d.h. jeweils in einer starren Lage, in der sie bei fluchtender Ausrichtung der Trägerelementabschnitte stirnseitig aneinanderstoßen. Eine solche Vorgehensweise ist zudem von Vorteil, da auf diese Weise die Trägerelementabschnitte beim Zusammenbau der Längsabschnitte leichter zugänglich sind, was den Zusammenbau während des Aufbaus der Versorgungstruktur erleichtert. In der Endlage soll hingegen die Leiterstruktur vom Turminneren her gesehen vorn liegend zugänglich sein, sodass diese als Aufstiegsleiter genutzt oder aber zum Anbringen einer Lifteinrichtung oder dergleichen genutzt werden kann.

Alternativ können die Trägerelementabschnitte aber auch in einer solchen Ausrichtung miteinander verbunden werden, in der die Leitersegmente bereits nach innen in Richtung des Turminnern weisen, also in der auch im finalen Zustand der Versorgungsstruktur bestehenden Ausrichtung liegen. Dies ist dann möglich, wenn die Leiterabschnitte an den Trägerelementabschnitten in Längsrichtung verlagerbar, z.B. verschwenk-, verschieb- oder verkippbar, angeordnet sind. Ein Schwenken der zunächst gelenkig miteinander verbundenen Trägerelementabschnitte in die geradlinige Ausrichtung kann dann auch in einer Ausrichtung erfolgen, in der die Leiterabschnitte zum Drehzentrum hingewandt liegend angeordnet sind, da ihre jeweiligen Enden durch die mögliche Verlagerung nicht aneinanderstoßen und sich behindern. Wenn zwei Trägerelementabschnitte dann fluchtend ausgerichtet sind, werden auch die Leiterabschnitte in der Längsrichtung der Trägerelementabschnitte in die gewünschte Endposition verlagert und darin fixiert und miteinander verbunden. Diese Schritte können vorzugsweise gemeinsam mit dem festen und biegesteifen Verbinden der beiden jeweils zueinander ausgerichteten und zu verbindenden Trägerelementabschnitte erfolgen.

Weiterhin ist es ergänzend zu einer wie vorstehend beschriebenen Ausgestaltung mit verlagerbaren Leiterabschnitten oder auch alternativ möglich, dass die Trägerelementabschnitte mit fest daran in einer Endposition fixiert angeordneten Leiterabschnitten zunächst nicht nur verschwenkbar, sondern auch in einer Längsrichtung um ein Maß verschiebbar miteinander verbunden werden, z.B. über einen in einem Langloch wenigstens eines der beteiligten Elemente geführten Verbindungsbolzen, und dass nach einem Ausrichten der Trägerelementabschnitte in fluchtender Ausrichtung diese Trägerelementabschnitte zusammengeschoben werden, bis die Leiterabschnitte passend aneinander liegen.

In einer weiteren Alternative kann auch vorgesehen sein, dass die Leiterabschnitte zunächst von den Trägerelementabschnitten getrennt vorliegen und erst dann auf diesen Trägerelementabschnitten aufgesetzt und daran festgelegt werden, wenn sich die Trägerelementabschnitte in einer fluchtenden Ausrichtung insbesondere eine im Wesentlichen vertikalen Erstreckung befinden. Auch hier kann mit Vorteil an Anbringen und Verbinden der Leiterabschnitte an den Trägerelementabschnitten erfolgen, wenn auch die biegesteife Verbindung der Trägerelementabschnitte miteinander vorgenommen wird.

An dieser Stelle ist noch einmal zu erwähnen, dass eine fluchtende und versatzsowie vorzugsweise auch stoßfugenfreie Verbindung der Leiterabschnitte miteinander insbesondere dann von besonderer Wichtigkeit ist, wenn im Anschluss an den Aufbau der Versorgungstruktur eine Lifteinrichtung daran installiert wird. Denn eine solche Lifteinrichtung verwendet in der Regel die vertikal aufwärts verlaufenden Seitenholme der Leiterstruktur als Führungs- bzw. Fahrschienen, die dann eben stufen- und unterbrechungsfrei verlaufen müssen.

Weitere Vorteile und Merkmale der Erfindung ergeben sich aus der nachstehenden Beschreibung möglicher Ausführungsvarianten und den anliegenden Figuren, auf die im Rahmen der nachfolgenden Beschreibung Bezug genommen wird. Dabei zeigen:
- Fig. 1: schematisch einen Ausschnitt einer erfindungsgemäßen Versorgungsstruktur, wie sie in einem vertikal oberen Abschnitt eines Turms einer Windenergieanlage lastragend aufgehängt ist;
- Fig. 2: in einer möglichen Gestaltungsvariante schematisch eine Darstellung einer einen Bestandteil der erfindungsgemäßen Versorgungsstruktur bildenden Einbaustruktur, wie sie auch im Rahmen eines erfindungsgemäßen Verfahrens für die Einreichung eines Turminnern mit einer solchen Versorgungsstruktur zu verwendenden ist;
- Fig. 3: eine Veranschaulichung des Einbaus der Einbaustruktur an einem oberen Ende eines Turmabschnitts;

- Fig. 4: eine Veranschaulichung der an dem oberen Ende in den Turm eingesetzten und dort fixierten Einbaustruktur;
- Fig. 5: eine Veranschaulichung der Installation einer Seilwinde auf dem Turmboden im Turminneren;
- Fig. 6: einen vergrößerten Ausschnitt der Einbaustruktur mit hier in Form von Umlenkrollen gebildetem Seilzugsystem und einem darauf angeordneten Abschnitt eines Zugseils;
- Fig. 7: eine Veranschaulichung des installierten Zugseils mit jeweils zum Turmboden reichenden Seilenden;
- Fig. 8: eine Darstellung eines ersten, obersten Längsabschnitts der Versorgungsstruktur;
- Fig. 9: eine Darstellung eines weiteren, dem obersten Längsabschnitt nachfolgenden Längsabschnitts der Versorgungsstruktur;
- Fig. 10: eine Veranschaulichung des Einbringens einzelner Längsabschnitte in das Turminnere durch eine Türöffnung einer Versorgungstür im untersten Turmsegment;
- Fig. 11: eine Veranschaulichung einer gelenkigen Verbindung zwischen zwei Längsabschnitten der Versorgungsstruktur;
- Fig. 12: eine Veranschaulichung der Verbindung zwischen zwei Längsabschnitten der Versorgungsstruktur in einer gestreckten und fluchtenden Ausrichtung der Längsabschnitte;
- Fig. 13: eine Veranschaulichung der festen Anbindung des oberen Endes des ersten Längsabschnittes der Versorgungsstruktur an einer hierfür vorgesehenen Anbindung der Einbaustruktur;
- Fig. 14: eine Veranschaulichung einer Abstützung der Versorgungsstruktur an der Turminnenwand;
- Fig. 15: eine Veranschaulichung der Installation eines Liftsystems an der Versorgungsstruktur sowie den Übergang der mit dem erfindungsgemäßen Verfahren installierten Versorgungsstruktur zu einer vormontierten Versorgungsstruktur in einem aufgesetzten weiteren Turmabschnitt;
- Fig. 16: eine der Fig. 11 vergleichbare Veranschaulichung einer gelenkigen Verbindung zwischen zwei Längsabschnitten der Versorgungsstruktur in einer alternativen Gestaltungsform;
- Fig. 17: eine Veranschaulichung der Verbindung zwischen zwei Längsabschnitten der Versorgungsstruktur in der alternativen Gestaltungsform gemäß Fig. 16 in einer gestreckten und fluchtenden, allerdings noch nicht final ausgerichteten Ausrichtung der Längsabschnitte;
- Fig. 18: eine Veranschaulichung der Verbindung zwischen den beiden Längsabschnitten der Versorgungsstruktur gemäß Fig. 17 in der alternativen Gestaltungsform in der gestreckten und fluchtenden, nun auch final ausgerichteten Ausrichtung der Längsabschnitte.

In den Figuren sind in verschiedenen Ansichten Bestandteile einer erfindungsgemäßen Versorgungsstruktur und sind Einrichtungen und Vorrichtungen gezeigt sowie Ablaufschritte veranschaulicht, die für ein erfindungsgemäßes Verfahren bedeutsam, bzw. vorteilhaft sind. Die Darstellungen sind dabei schematisch zu verstehen und keinesfalls maßstabsgerecht. Sie sind insoweit keinesfalls als Konstruktionsvorgaben aufzufassen, sondern lediglich als zeichnerische Veranschaulichung der allgemeinen Vorgehensweise nach dem erfindungsgemäßen Verfahren sowie gemäß vorteilhaften Ausgestaltungen desselben.

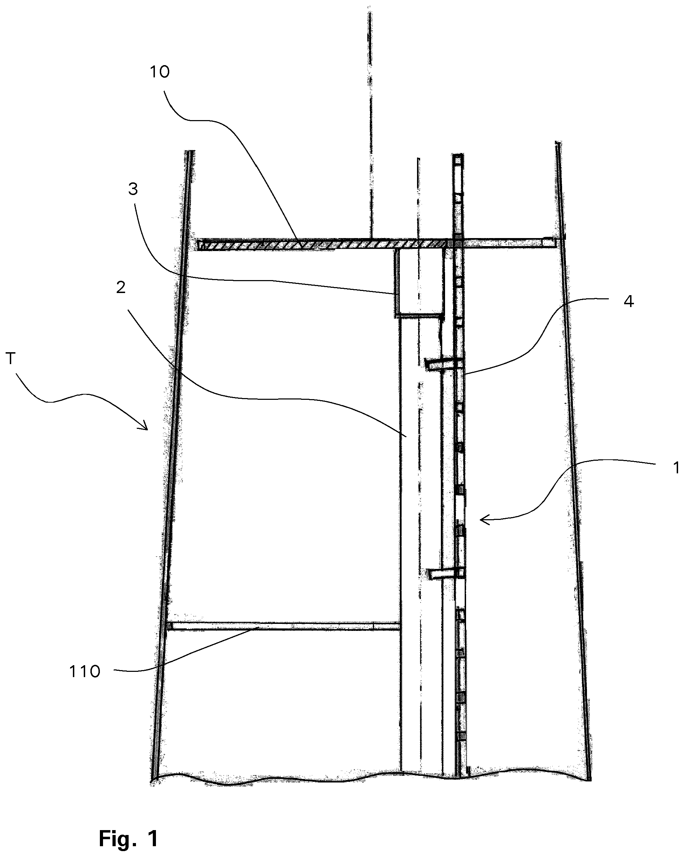

Fig. 1 veranschaulicht, in einer Ausschnittdarstellung, den generellen Aufbau einer erfindungsgemäßen Versorgungsstruktur 1, wie sie im Innern eines Turmes T einer Windenergieanlage installiert ist. Hierbei ist eine Einbaustruktur 10 in einem vertikal höher gelegenen Abschnitt des Turms T festgelegt, insbesondere lastabführend mit der Turmwand verbunden, dies insbesondere umlaufend. An der Einbaustruktur 10 ist eine Trägerstruktur 2 lasttragend aufgehängt. Bei der Trägerstruktur kann es sich insbesondere um ein säulenartiges oder rohrförmiges Element handeln, das insbesondere aus einer Mehrzahl von miteinander Längsabschnitten zusammengensetzt ist. Die Trägerstruktur2 ist dabei für eine lasttragende Verbindung mit der Einbaustruktur 10 an einer mit der Einbaustruktur verbundenen Ankerstruktur 3 verbunden. Bei der Ankerstruktur 3 kann es sich z.B. um eine Flanschstruktur handeln, z.B. eine Art Rohrstutzen, auf den eine rohrförmige Trägerstruktur 2 aufgeschoben und über Bolzenverbindungen verschraubt ist. Die Versorgungsstruktur 1 ist dabei allein an Einbaustruktur 10 aufgehängt und ist nicht lasttragend auf dem Turmboden aufgestellt oder in ihren Zwischenabschnitten an der Turminnenwand aufgehängt. Über Stützstreben 110 ist die Versorgungsstruktur 1, genauer die Trägerstruktur 2, gegen ein Verkippen und/oder Tordieren an der Turminnenwand abgestützt. Diese Stützstreben 110 übernehmen dabei keine lasttragende Funktion zum Ableiten von Vertikallasten.

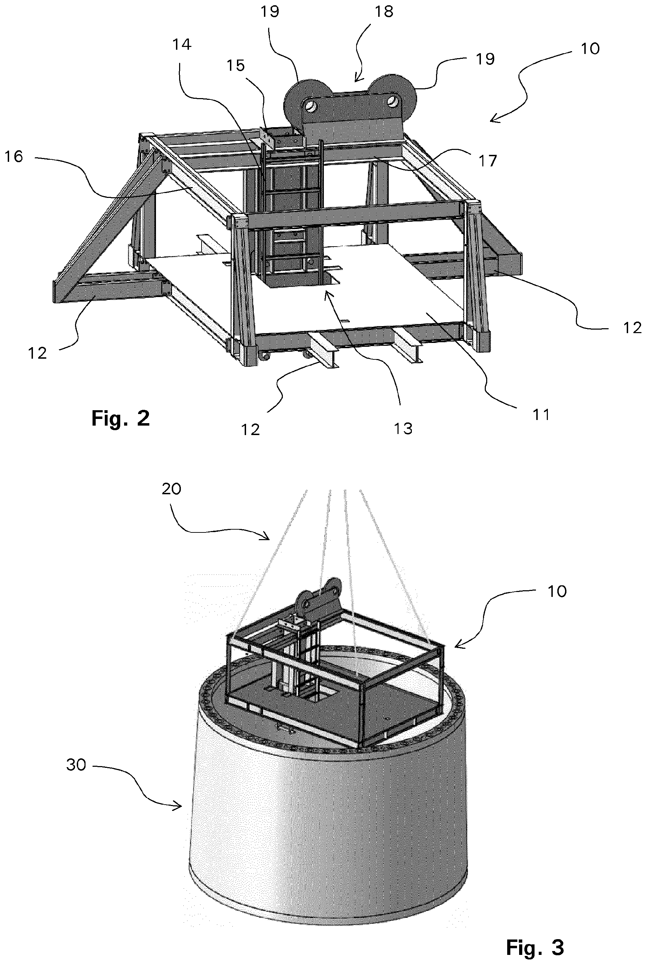

In Fig. 2 ist eine mögliche Ausgestaltung der Einbaustruktur 10, die Bestandteil einer erfindungsgemäßen Versorgungsstruktur 1 ist und die für die Durchführung eines erfindungsgemäßen Verfahrens auf einem oberen Abschnitt eines Turmabschnitts auf- bzw. in diesen eingesetzt wird, genauer dargestellt. Die Einbaustruktur 10 weist eine Plattform 11 auf, die auf längs und quer verlaufende Trägerelementen 12 aufgesetzt ist. In der Plattform 11 ist eine Durchtrittsöffnung 13 vorgesehen, aus der heraus sich nach oben hin ein Leiterabschnitt 14 erstreckt und in der zudem ein Rohrabschnitt 15 geführt ist, der einen quadratischen Querschnitt aufweist. Auf einem oberhalb der Plattform 11 angeordneten und an einem Rahmen 16 befestigten Träger 17 ist ein Seilzugsystem, hier eine Umlenkeinrichtung 18 mit zwei daran drehbar angeordneten Umlenkrollen 19, festgelegt, wobei eine in der Fig. 2 links dargestellte Umlenkrolle 19 so oberhalb einer Öffnung des Rohrabschnitts 15 gelegen ist, dass ein über die Umlenkrollen 19 gelegtes Seil durch das Innere des Rohrabschnitts 15 hindurch verlaufend senkrecht nach unten hängen kann. An der Einbaustruktur 10 kann gemäß der Erfindung ebenso aber auch eine andere Ausführung eines Seilzugsystems angeordnet sein, wie dies vorstehend im Zuge der allgemeinen Erläuterung der Erfindung beschrieben ist.

Eine solche, wie in Fig. 2 dargestellte Einbaustruktur 10 wird im Verlaufe der Durchführung eines erfindungsgemäßen Verfahrens für ein Einbringen einer Versorgungsstruktur in das Innere des Turms einer Windenergieanlage auf einem obersten Segment eines Turmabschnitts auf- bzw. in ein solches eingesetzt. Dies geschieht mithilfe eines Krans, mit dem die Einbaustruktur 10 angehoben und von oben auf bzw. in den Turmabschnitt auf- bzw. eingesetzt wird. Veranschaulicht ist dies in Fig. 3, in der gezeigt ist, wie die Einbaustruktur 10, angeschlagen an einem Hebegeschirr 20 eines nicht dargestellten Krans oberhalb eines Turmsegments 30 schwebt und in dieses Turmsegments 30 eingelassen wird. Bei dem Turmsegment 30 kann es sich zum Beispiel um einen auf einen unteren, in Beton-, bzw. Stahlbetonbauweise errichteten Turmabschnitt, auf dessen oberstes Turmsegment aufgesetztes Adapterstückes handeln, an das sich wiederum ein weiterer Turmabschnitt anschließt, der in Stahlbauweise errichtet ist.

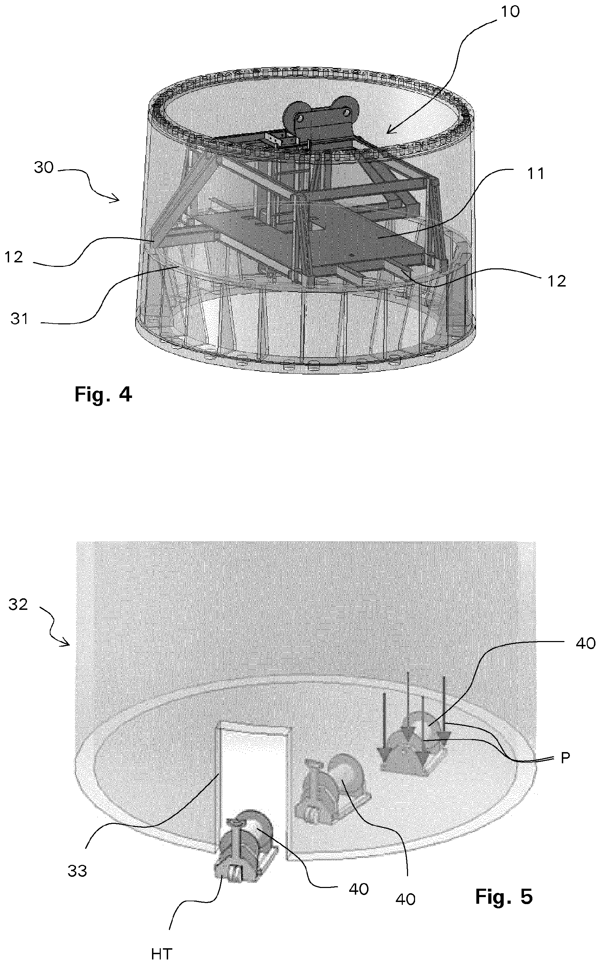

In Fig. 4 ist gezeigt, wie die Einbaustruktur 10 in dem Turmsegment 30 eingesetzt ist und mit den Trägerelementen 12 auf einer umlaufenden Konsole 31 in dem Turmsegments 30 aufsetzt. In dem vorliegenden Fall ist die Einbaustruktur 10 zum dauerhaften Verbleib in den Turmsegment 30 vorgesehen, bildet dort eine auch im späteren Betrieb benutzte Plattform 11 aus. Entsprechend werden die Trägerelemente zwölf auf der Konsole 31 festgelegt, zum Beispiel mit Bolzen oder über eine Schweißverbindung oder dergleichen.

Für die Durchführung des erfindungsgemäßen Verfahrens ist eine Seilwinde erforderlich. Diese kann an unterschiedlichen Positionen angeordnet sein, z.B. auch an der Einbaustruktur 10. In dem hier näher erläuterten Ausführungsbeispiel wird die Seilwinde 40 in das Turminnere verbracht, was, wie in Fig. 5 veranschaulicht, zum Beispiel mithilfe eines Hubtransportwagens HT geschehen kann und durch eine in einem untersten Turmsegment 32 belassene Türöffnung 33 für eine Versorgungstür geschehen kann. Die Seilwinde 40 wird bis zu einem Aufstellungsort verbracht und, wie durch die Pfeile P angedeutet, dort festgelegt, zum Beispiel mittels Schraubbolzen im Fundament verankert. Hierfür können zum Beispiel in dem Fundament des Turmbodens bereits vorpositionierte Ankerstellen ausgewiesen und/oder Verankerungselemente positioniert sein.

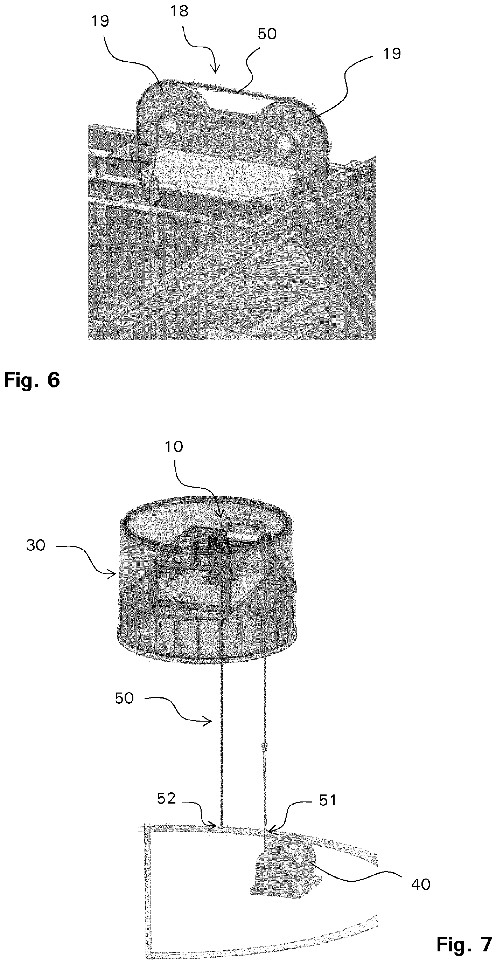

Wie in Fign. 6 und 7 veranschaulicht, wird bei einem Vorgehen mit einer an dem Turmboden angeordneten Seilwinde 40 über die Umlenkrollen 19 der Umlenkeinrichtung 18 ein Zugseil 50 gelegt und mit beiden Enden herabhängend in Richtung des Turmbodens abgelassen. Ein erstes Ende 51 ist dabei in Richtung der Seilwinde 40 geführt und wird auf diese aufgewunden, bzw. mit einem Zugende eines Zugseils der Seilwinde 40 verbunden, ein zweites Ende 52 des Zugseils 50 ist durch das Innere des Rohrabschnitts 15 hindurchgeführt und hängt frei bis zum Boden des Turmabschnitts. Dieses zweite Ende 52 dient einem Anschlagen von Längsabschnitten einer Versorgungstruktur, wie dies nachstehend noch näher beschrieben wird. Alternativ kann die Seilwinde 40 aber auch andernorts positioniert werden und kann das Zugseil 50 bereits mit dem ersten Ende mit der Seilwinde verbunden sein. Wichtig ist in jedem Fall, dass das Zugseil mit dem zweiten Ende 52 ausgehend von dem an der Einbaustruktur 10 vorgesehenen Seilzugsystem frei im Turminnern herabhängt in Richtung des Turmbodens und dort erreichbar ist zum Anschlagen an den Längsabschnitten der Versorgungsstruktur.

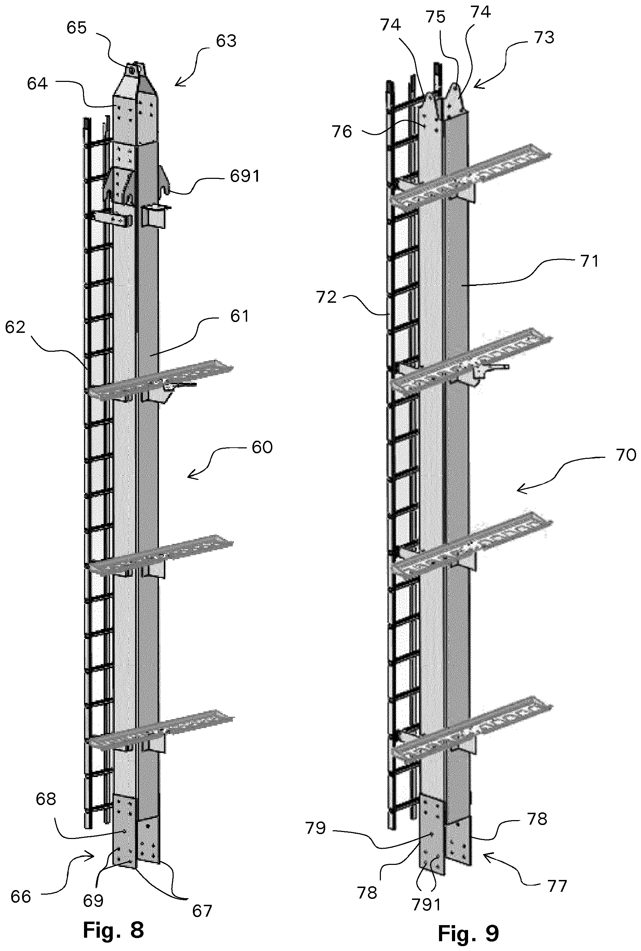

Derartige Längsabschnitte der Versorgungstruktur sind in den Fign. 8 und 9 veranschaulicht. In der Fig. 8 ist ein erster Längsabschnitt 60 gezeigt, die Fig. 9 veranschaulicht einen zweiten bzw. weiteren Längsabschnitt 70, von denen mehrere zusammengefügt und mit dem ersten Längsabschnitt 60 verbunden die in dem Turminnern zu installierende Versorgungsstruktur ausbilden.

Der erste Längsschnitt 60 weist eine einen quadratischen Querschnitt aufzeigende, rohrförmige Trägerstruktur 61 und eine daran angeordnete Leiterstruktur 62 auf. An einem ersten, oberen Ende 63 der Trägerstruktur 61 ist eine Führungsstruktur 64 festgelegt, an deren freien Ende eine Anschlagbohrung 65 ausgebildet ist. Diese dient einer Verbindung mit dem zweiten Ende 52 des Zugseils 50 in einer nachfolgend noch näher zu beschreibenden Weise. An einem zweiten, unteren Ende 66 an der Trägerstruktur 61 zwei einander gegenüberliegende Befestigungsplatten 67 festgelegt, die fluchtende zentrale Verbindungsbohrungen 68 sowie weitere fluchtende Verbindungsbohrungen 69 in einer Anordnung an Eckpositionen eines Quadrats aufweisen.

Der weitere Längsabschnitt 70, der in Fig. 9 gezeigt ist, ist in ähnlicher Weise gebildet, wie der ersten Längsabschnitt 60. Auch er weist eine einen quadratischen Querschnitt aufzeigenden rohrförmige Trägerstruktur 71 und eine daran festgelegte Leiterstruktur 72 auf. An einem ersten, oberen Ende 73 ist an der Trägerstruktur 71 eine sich verjüngende Konsole ausgebildet in Form von zwei einander gegenüberliegenden, entsprechend geformten Wandabschnitten 74, die in den verjüngt zulaufenden Enden fluchtende Verbindungsbohrungen 75 aufweisen. Unterhalb der Verbindungsbohrungen 75 sind in einer analogen Anordnung zu der Anordnung der Verbindungsbohrungen 69 an dem ersten Längsabschnitt 60 Verbindungsbohrungen 76 gebildet. An dem zweiten, unteren Längsende 77 sind auch an der Trägerstruktur 71 des Längsabschnitts 70 einander gegenüberliegende Befestigungsplatten 78 angeordnet, die wiederum je eine zentrale Verbindungsbohrung 79 aufweisen, die miteinander fluchten, und darunter angeordnet an den vier Eckpositionen eines Quadrats Verbindungsbohrungen 791.

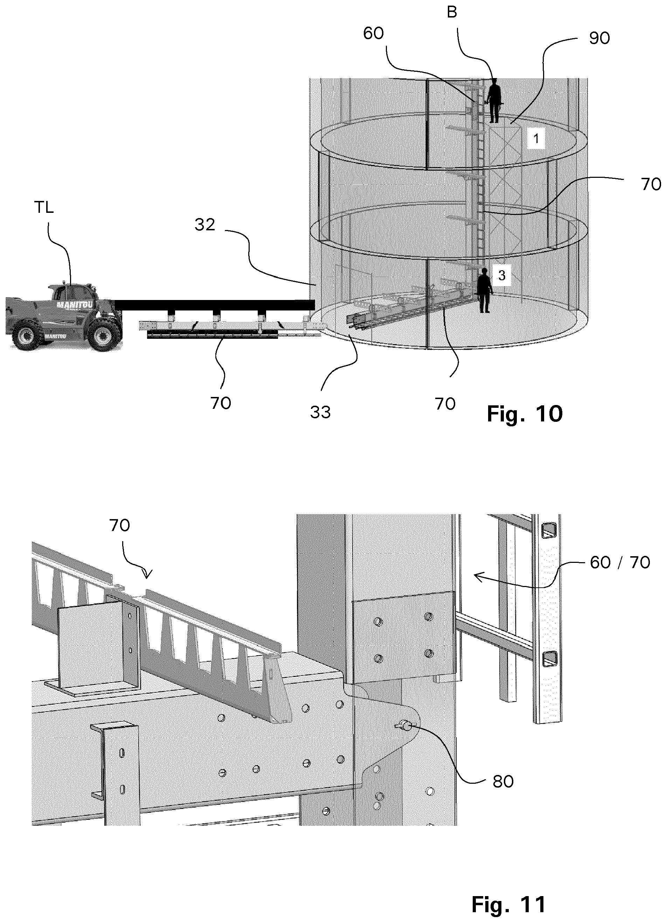

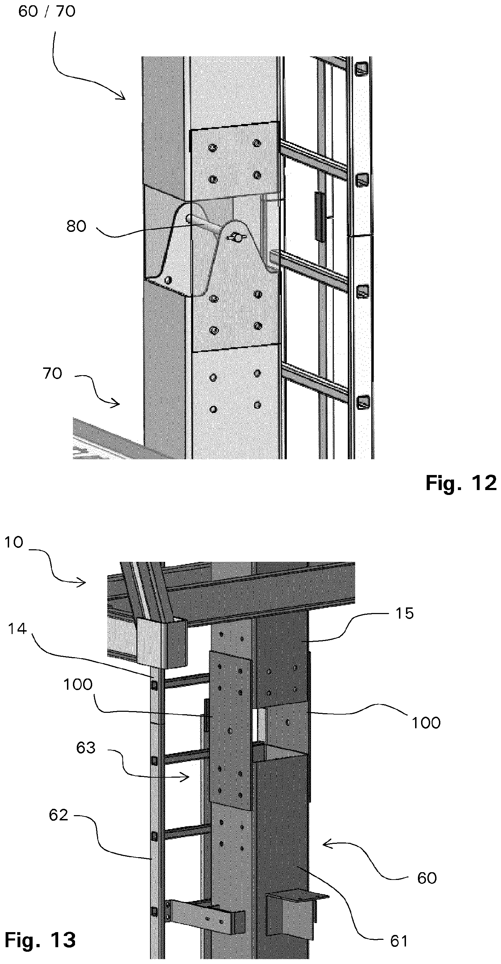

Zum Errichten der aus einem in Fig. 8 gezeigten ersten Längsabschnitt 60 und weiteren, nämlich einer Mehrzahl, von weiteren Verbindungsabschnitten 70 gemäß Fig. 9 zusammengesetzten Versorgungsstruktur wird zunächst ein erster Längsabschnitt 60 durch die Türöffnung 33 in das Innere des Turms verbracht, zum Beispiel mit einem Teleskoplader TL, wie er in Fig. 10 veranschaulicht ist. Der dort auf dem Boden dann abgelegte erste Längsabschnitt 60 wird mit seinem oberen Ende 63 voran und über die Anschlagbohrungen 65 mit dem zweiten Ende 52 des Zugseils 50 verbunden, z.B. mit einem Anschlagschekel. Anschließend wird das erste Ende 51 des Zugseils 50 auf die Seilwinde 40 aufgewickelt und dadurch der erste Längsabschnitt 60 der Verbindungstruktur soweit angehoben, dass er in einer Schrägstellung oder aber auch in einer Vertikalstellung halb schwebend mit seinem zweiten, unteren Ende 66 noch auf dem Boden des Turms ruht. Nun wird mit dem Teleskoplader TL ein weiterer Längsabschnitt 70 der Versorgungsstruktur durch die Türöffnung 33 in das Innere des Turms verbracht und mit seinem oberen Ende 73 mit dem unteren Ende 66 des ersten Längsabschnitt 60 verbunden, wobei diese Verbindung hergestellt wird durch Einfädeln der an dem oberen Ende 73 des weiteren Längsabschnitt 70 ausgebildeten Konsole zwischen die Befestigungsplatten 67 am unteren Ende 66 des ersten Längsabschnitts 60 soweit, bis die Befestigungsbohrungen 68 und die Befestigungsbohrungen 75 miteinander fluchten und ein Befestigungsbolzen 80 (vergleiche Fig. 11) durch diese Bohrungen 68, 75 hindurchgeführt werden kann zum Herstellen einer gelenkigen Verbindung. Ist diese Verbindung hergestellt, wird durch weiteres Aufwickeln des ersten Endes 51 des Zugseils 50 auf die Seilwinde 40 der erste Längsabschnitt 60 und mit diesem der weitere Längsabschnitt 70, der an dem ersten Längsabschnitt 60 gelenkig angebunden ist, weiter angehoben und zwar so lange, bis der weitere Längsabschnitt 70 mit seinem zweiten Ende 77 auf dem Boden des Turms ruhend sich in einer schrägen oder senkrecht weisenden Position befindet (vergleiche Fig. 12). Nun wird ein weiterer Längsabschnitt 70 mit dem Teleskoplader TL in das Turminnere durch die Türöffnung 33 hindurch verbracht und wird dieser in der wie vorstehend beschriebenen Weise mit dem zweiten Ende 77 des zuvor installierten weiteren Längsabschnitts 70 gelenkig verbunden.

Auf einer in dem Turminneren errichteten Montageplattform 90 befindet sich eine Bedienperson B, die an den dort senkrecht ausgerichteten, aneinander angrenzenden Längsabschnitten 60 und 70, bzw. 70 und 70, durch Einbringen von Befestigungsbolzen durch die nun fluchtenden Verbindungsbohrungen 69 und 76 bzw. 791 und 76 die geschaffene Verbindung in einer biegesteifen Ausrichtung zueinander fixiert und den zuvor eingebrachten Bolzen 80 entfernt. So wird an dieser Stelle die entstehende Versorgungstruktur versteift und starr miteinander verbunden.

Das vorstehend geschilderte Vorgehen wird wiederholt, bis die Versorgungstruktur über die gesamte Höhe errichtet ist, d. h. bis der erste Längsabschnitt 60 durch fortwährendes Einziehen des Zugseil 50 auf der Seilwinde 40 bis auf die Höhe der Plattform 11 der Einbaustruktur 10 angehoben ist.

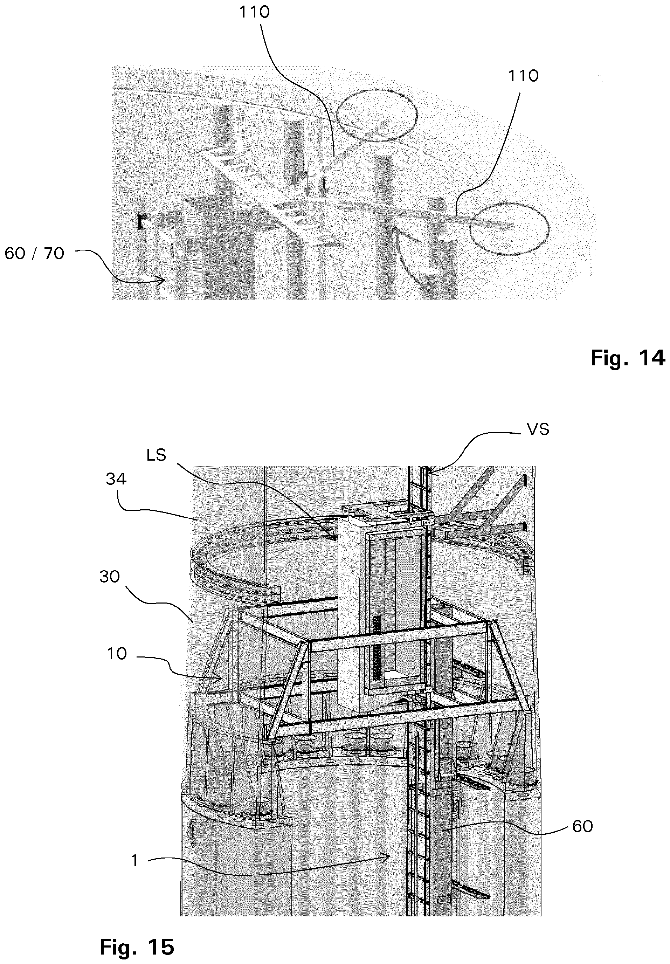

Wie insbesondere Fig. 10 erkennen lässt, kann die Errichtung der Versorgungstruktur zunächst in einer solchen Ausrichtung erfolgen, dass die Abschnitte der Leiterstruktur 62 bzw. 72 der Turminnenwand zugewandt sind, die Abschnitte der Trägerstruktur 61 bzw. 71 in Richtung des Turminneren weisen. Sobald der letzte der Längsabschnitte 70 in einer biegesteifen Weise fixiert und so weit angehoben ist, dass er den Turmboden nicht mehr berührt, wird bei einer solchen Vorgehensweise die Anordnung der Versorgungsstruktur um ihre Längsachse um 180° gedreht, sodass die aus den Abschnitten der Trägerstruktur 61, 71 zusammengesetzte Trägerstruktur der Turmwand zugewandt ist, die aus den Abschnitten der Leiterstruktur 62 und 72 zusammengesetzte Leiter in Richtung des Turminneren weist. Schließlich wird am oberen Ende 63 der Trägerstruktur 61 des ersten Längsabschnitts 60 die Führungsstruktur 64 entfernt, wozu zunächst über eine Hilfskonstruktion (hier nicht gezeigt) die Trägerstruktur 61 mit den in Fig. 8 erkennbaren Hakenelementen 691 eingehakt und so aufgehängt wird. Durch Anbringen von in Fig. 13 gezeigten Verbindungsplatten 100 und Verbolzen derselben wird dann eine feste Verbindung zwischen dem Rohrabschnitt 15 der Einbaustruktur 10 und der Trägerstruktur 61 des ersten Längsabschnitts 60 geschaffen. In dieser Position und Anordnung ist dann der Leiterabschnitt 62 des ersten Längsabschnitts der Versorgungstruktur fluchtend ausgerichtet mit dem Leiterabschnitt 14 an der Einbaustruktur 10. Für eine weitere Fixierung und Absicherung der Versorgungsstruktur 1 können dann, wie in Fig. 14 gezeigt, die Stützstreben 110 die Versorgungsstruktur 1, genauer die Trägerstrukturen 61, 71 mit der Turminnenwand verbindend angeordnet und festgelegt werden.

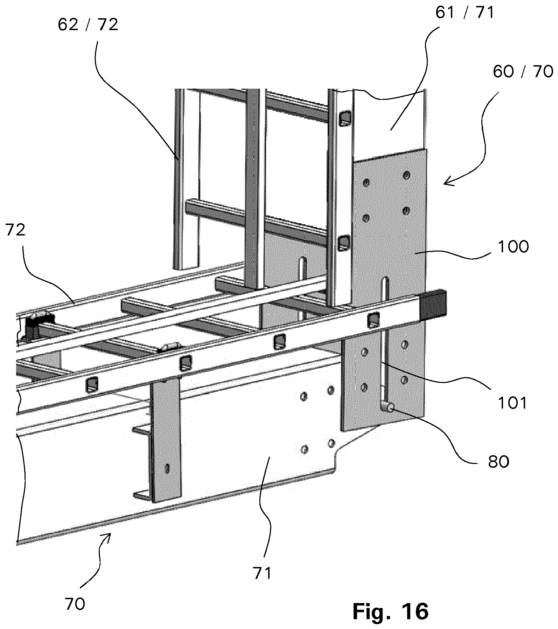

Ein alternativ mögliches Vorgehen zum Verbinden der Längsabschnitte 60, 70 ist in den Figuren 16 bis 18 gezeigt. Dort werden die Längsabschnitte 60, 70, werden insbesondere die Abschnitte der Trägerstruktur 61, 71, in einer solchen Ausrichtung miteinander verbunden, in der die Abschnitte der Leiterstruktur 62, 72 bereits nach innen in Richtung des Turminnern weisen, sodass sie also bereits in der auch im finalen Zustand der Versorgungsstruktur bestehenden Ausrichtung liegen und ein Drehen der fertiggestellten Anordnung der Versorgungsstruktur um deren Längsachse nicht erforderlich ist. Bei dieser Ausführungsform sind die beiden Abschnitte der Trägerstruktur 61 und 71, bzw. 71 und 71 zunächst ebenfalls mit einem Befestigungsbolzen 80 verbunden, ist dieser Befestigungsbolzen aber in Langlöchern 101 längsverschiebbar geführt, die in den einander gegenüberliegenden Befestigungsplatten 100 gebildet sind. Dadurch können die beiden auf diese Weise vorläufig verbundenen Abschnitte der Trägerstruktur 61/71 und 71 nicht nur relativ zueinander verschwenkt werden, sondern kann auch ein Auseinanderziehen, bzw. aufeinander zu Schieben dieser Abschnitte 61/71 und 71 erfolgen. Zudem kann hier vorgesehen sein, dass die Abschnitte der Leiterstruktur 62/72 und 72 an den Abschnitten der Trägerstruktur 61/71 und 71 in Längsrichtung der jeweiligen Abschnitte verlagerbar, z.B. verschwenk-, verschieb- oder verkippbar, angeordnet sind.

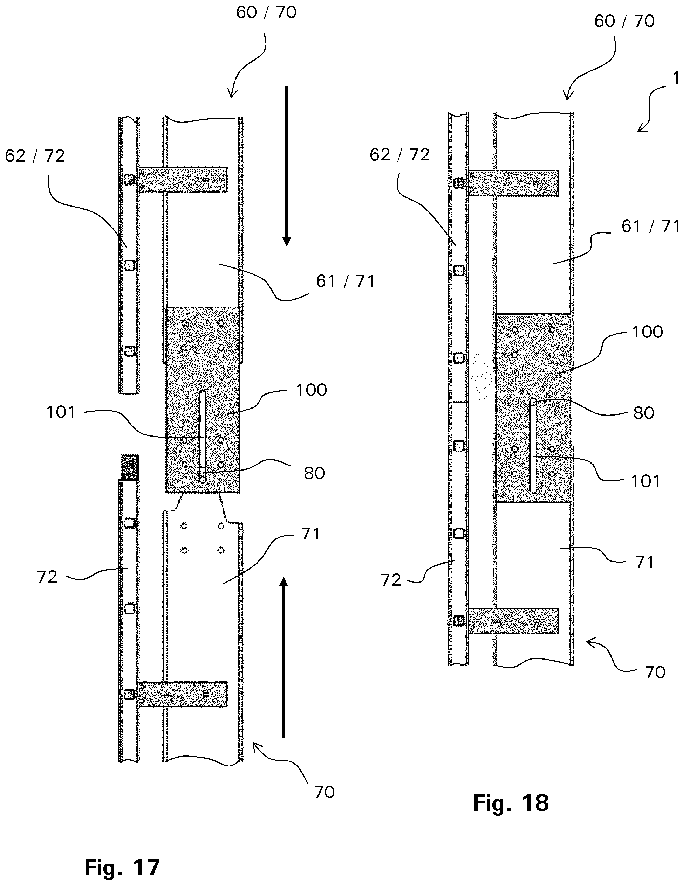

Diese Lösung erlaubt es, dass die Abschnitte der Leiterstruktur 62/72 und 72 bei einem Verschwenken aus einer wie in der Fig. 16 gezeigten Lage in eine wie in der Fig. 17 gezeigten Position nicht miteinander kollidieren und so ein Ausrichten in die langgestreckte, fluchtend ausgerichtete Position verhindern, obwohl diese auf der Innenseite der angewinkelten Ausrichtung der Längsabschnitte 60/70 und 70 liegen.

Nach dem Auseinanderschwenken der beiden Längsabschnitte 60/70 und 70 werden diese, wie in der Fig. 17 durch die Pfeile angedeutet ist, in Längsrichtung noch aufeinander zu geschoben, wobei der Befestigungsbolzen 80 in den Langlöchern 101 verschoben wird. Ist die in der Fig. 18 gezeigte finale Lage, in der die Abschnitte der Leiterstruktur 62/72 und 72 mit ihren Längsstreben nahtlos und fluchtend aneinander liegen, erreicht, werden die beiden Längsabschnitte 60/70 und 70 analog der vorstehend beschriebenen Vorgehensweise in einer biegesteifen Verbindung aneinander festgelegt. Sofern die Abschnitte der Leiterstruktur 62/72 und 72 an den Abschnitten der Trägerstruktur 61/71 und 71 verlagerbar angeordnet waren, werden diese bei der Durchführung des vorstehenden Schrittes oder davor in der finalen Position ausgerichtet und fixiert.

In Fig. 15 ist dann gezeigt, wie im Bereich des Adapterabschnitts 30, auf dem ein Stahlturmabschnitt 34 aufgesetzt ist, ein Übergang zu einer Versorgungsstruktur VS geschaffen ist, die in dem Stahlturmabschnitt 34 in anderer Weise eingebracht ist und wie weiterhin ein Liftsystem LS installiert ist, welches sich entlang der Versorgungstruktur fortbewegen kann, um Personen und/oder Lasten in vertikaler Richtung im Turminneren aufwärts und abwärts zu befördern.

Am Ende der Einrichtung der Versorgungstruktur in der wie vorstehend beschriebenen Weise kann die Seilwinde 40 wieder entnommen werden, kann das Zugseil 50 entfernt werden und kann insbesondere auch die Umlenkeinrichtung 18 mit den beiden Umlenkrollen 19 abgebaut und ebenfalls wiederverwendet werden.

Die fertig aus den Längsabschnitten 60 und 70 gebildete Versorgungsstruktur 1 ist am Ende der Installation hängend angebracht, aufgehängt an der Einbaustruktur 10 und in einer mögliche Gestaltungsvariante zudem seitlich abgestützt an der Turminnenwand.

Das vorstehend beschriebene Ausführungsbeispiel und die in den Figuren gezeigten Ausführungsformvarianten stellen nicht etwa die einzige Möglichkeit dar, eine erfindungsgemäße Versorgungsstruktur zu bilden, bzw. ein erfindungsgemä-βes Verfahren umzusetzen. Sie dienen lediglich der Veranschaulichung, und der Fachmann wird vor dem Hintergrund seines fachlichen Wissens und Könnens weitere Varianten und Abwandlungen der vorstehend beschriebenen konkreten Beispiele sehen und erkennen, wie eine erfindungsgemäße Versorgungsstruktur umgesetzt werden kann und mit denen das erfindungsgemäße Verfahren ebenfalls in erfindungsgemäßer Weise umgesetzt werden kann. Auch solche Varianten fallen insbesondere unter die nachstehenden Ansprüche.

### Bezugszeichenliste

- 1: Versorgungstruktur
- 2: Trägerstruktur
- 3: Ankerstruktur
- 4: Anbaustruktur
- 10: Einbaustruktur
- 11: Plattform
- 12: Trägerelement
- 13: Durchtrittsöffnung
- 14: Leiterabschnitt
- 15: Rohrabschnitt
- 16: Rahmen
- 17: Träger
- 18: Umlenkeinrichtung
- 19: Umlenkrolle
- 20: Hebegeschirr
- 30: Turmsegment
- 31: Konsole
- 32: Turmsegment
- 33: Türöffnung
- 34: Stahlturmabschnitt
- 40: Seilwinde
- 50: Zugseil
- 51: erstes Ende
- 52: zweites Ende
- 60: erster Längsabschnitt
- 61: Trägerstruktur
- 62: Leiterstruktur
- 63: erstes Ende
- 64: Führungsstruktur
- 65: Anschlagbohrung
- 66: zweites Ende
- 67: Befestigungsplatte
- 68: Verbindungsbohrung
- 69: Verbindungsbohrung
- 70: weiterer Längsabschnitt
- 71: Trägerstruktur
- 72: Leiterstruktur
- 73: erstes Ende
- 74: Wandabschnitt
- 75: Verbindungsbohrung
- 76: Verbindungsbohrung
- 77: zweites Ende
- 78: Befestigungsplatte
- 79: Verbindungsbohrung
- 791: Vebindungsbohrung
- 80: Befestigungsbolzen
- 90: Montageplattform
- 100: Verbindungsplatte
- 101: Langloch
- 110: Stützstrebe

- B: Bedienperson
- HT: Hubtransportwagen
- LS: Liftsystem
- P: Pfeil
- T: Turm
- TL: Teleskoplader
- VS: Versorgungsstruktur

## Patentansprüche

1. Im Innern eines Turmes (T) einer Windenergieanlage installierte Versorgungsstruktur (1) mit einer eine, insbesondere ring- oder teilringförmig gebildeten, Abstützstruktur zum Abstützen an oder auf einem vertikal erhöht gelegenen Turmwandabschnitt aufweisenden Einbaustruktur (10), wobei die Einbaustruktur (10) eine Ankerstruktur (3; 15) aufweist und mit einer an der Ankerstruktur (3; 15) tragend aufgehängten, sich von der Einbaustruktur (10) im Wesentlichen vertikal nach unten erstreckenden Trägerstruktur (2; 61, 71) sowie mit an der Trägerstruktur (2; 61, 71) festgelegten Anbauelementen (4; 62, 72).

2. Versorgungsstruktur (1) nach Anspruch 1, **dadurch gekennzeichnet, dass** die Anbauelemente (4; 62, 72) Leiterabschnitte umfassen, die sich in im Wesentlichen vertikaler Richtung an der Trägerstruktur (2; 61, 71) entlang erstrecken.

3. Versorgungsstruktur (1) nach einem der vorhergehenden Ansprüche, **dadurch gekennzeichnet, dass** sich die Trägerstruktur (2; 61, 71) hängend bis in etwa zum Boden eines Turmes (T) einer Windenergieanlage erstreckt.

4. Versorgungsstruktur (1) nach einem der vorhergehenden Ansprüche, **dadurch gekennzeichnet, dass** die Trägerstruktur (2; 61, 71) mit Stützelementen (110) verbunden ist zum seitlichen Abstützen an einer Turminnenwand.

5. Versorgungsstruktur (1) nach einem der vorhergehenden Ansprüche, **dadurch gekennzeichnet, dass** sie aus miteinander in einer aufwärts verlaufenden Längsrichtung verbundenen Längsabschnitten (60, 70) gebildet ist.

6. Versorgungsstruktur (1) nach einem der vorhergehenden Ansprüche, **dadurch gekennzeichnet, dass** sie ein an der Trägerstruktur (2; 61, 71) oder an den Anbauelementen (4; 62, 72) angeordnetes Liftsystem (LS) umfasst.

7. Insbesondere in Hybridbauweise aus einem unteren Betonturmabschnitt und einem oberen Stahlturmabschnitt errichteter, Turm (T) einer Windenergieanlage mit einer in seinem Innern eingerüsteten Versorgungsstruktur (1) nach einem der Ansprüche 1 bis 6.

8. Verfahren zum Einrüsten eines, insbesondere in Hybridbauweise aus einem unteren Betonturmabschnitt und einem oberen Stahlturmabschnitt errichteten, Turms (T) einer Windenergieanlage mit einer im Turminneren jedenfalls über einen Turmabschnitt von einem Turmboden her aufwärts verlaufenden Versorgungsstruktur (1) nach einem der Ansprüche 1 bis 6 aus miteinander in einer aufwärts verlaufenden Längsrichtung verbundenen Längsabschnitten (60, 70), mit folgenden Schritten
a. Anordnen einer wenigstens ein Seilzugsystem, wie z.B. eine Umlenkrolle (19), für ein Zugseil (50) aufweisenden Einbaustruktur (10) an einer Oberseite eines aus einer Mehrzahl von Turmsegmenten gebildeten Turmabschnitts und Anordnen eines mit dem Seilzugsystem gekoppelten Zugseils (50) in der Einbaustruktur (10) derart, dass es mit einem ersten Ende (51) seiner beiden einander gegenüberliegenden Enden (51, 52) mit einer Seilwinde (40) verbunden oder verbindbar ist und mit dem zweiten Ende (52) seiner beiden Enden (51, 52) bei montierter Einbaustruktur (10) in Richtung des Turmbodens und bis zu diesem reichend herabhängt,
b. dann, wenn das erste (51) der beiden Enden (51, 52) des Zugseils noch nicht mit einer Seilwinde (40) verbunden ist, Verbinden des ersten (51) der beiden Enden (51, 52) des Zugseils (50) mit einer Seilwinde (40),
c. bodenseitiges Einbringen eines ersten, obersten Längsabschnitts (60) der Versorgungsstruktur (1) in das Turminnere und Verbinden eines ersten, oberen Endes (63) des ersten Längsabschnitts (60) der Versorgungsstruktur (1) mit dem zweiten (52) der beiden Enden (51, 52) des Zugseils (50),
d. aufwärts Ziehen des ersten Längsabschnitts (60) der Versorgungsstruktur durch Aufwickeln des ersten Endes (51) des mit dem Seilzugsystem gekoppelten Zugseils (50) auf die Seilwinde (40) soweit, dass ein zweites Ende (66) des ersten Längsabschnitts (60) der Versorgungsstruktur (1) von dem Turmboden her weiterhin zugänglich ist,
e. bodenseitiges Einbringen eines weiteren Längsabschnitts (70) der Versorgungsstruktur in das Turminnere und gelenkiges Verbinden eines ersten, oberen Endes (73) des weiteren Längsabschnittes (70) der Versorgungsstruktur (1) mit dem zweiten Ende (66) des ersten Längsabschnitts (60) der Versorgungsstruktur (1),
f. weiteres aufwärts Ziehen des ersten Längsabschnitts (60) der Versorgungsstruktur durch Aufwickeln des ersten Endes (51) des Zugseils (50) auf die Seilwinde (40) soweit, dass ein zweites Ende (77) des weiteren Längsabschnitts (70) der Versorgungsstruktur (1) von dem Turmboden her weiterhin zugänglich ist,
g. bodenseitiges Einbringen eines weiteren Längsabschnitts (70) der Versorgungsstruktur in das Turminnere und gelenkiges Verbinden eines ersten, oberen Endes (73) des weiteren Längsabschnittes (70) der Versorgungsstruktur mit dem zweiten Ende (77) des zuvor eingebrachten Längsabschnitts (70) der Versorgungsstruktur (1),
h. weiteres aufwärts Ziehen des ersten Längsabschnitts (60) der Versorgungsstruktur durch Aufwickeln des ersten Endes (51) des Zugseils (50) auf die Seilwinde (40) soweit, dass ein zweites Ende (77) des zuletzt eingebrachten weiteren Längsabschnitts (70) der Versorgungsstruktur von dem Turmboden her weiterhin zugänglich ist,
i. Wiederholen der Schritte g. und h. solange, bis der erste Längsabschnitt (60) der Versorgungsstruktur (1) bis auf eine zu erreichende Errichtungshöhe, insbesondere bis auf eine Höhe der Einbaustruktur (10), angehoben ist und ein unterster weiterer Längsabschnitt (70) fluchtend mit den vorherigen Längsabschnitten (60, 70) ausgerichtet und ausgehend von dem Turmboden erreichbar ist.

9. Verfahren nach Anspruch 8, **dadurch gekennzeichnet, dass** die gelenkig ausgeführten Verbindungen zwischen zwei aneinander befestigten Längsabschnitten (60, 70; 70, 70) der Versorgungsstruktur (1) in einem unteren Bereich des Turmabschnitts, in dem durch das Anheben der Längsabschnitte (60, 70) der Versorgungsstruktur (1) sich diese Längsabschnitte (60, 70) geradlinig und fluchtend zueinander ausgerichtet haben, in dieser Ausrichtung in einer biegesteifen Verbindung zueinander fixiert werden.

10. Verfahren nach Anspruch 9, **dadurch gekennzeichnet, dass** in dem Turminnern eine bis zu einer solchen Höhe reichende Hilfsplattform (90) errichtet wird, dass von dort aus die Fixierung der geradlinig und fluchtend verlaufenden Längsabschnitte (60, 70; 70, 70) der Versorgungstruktur (1) durch eine Bedienperson (B) vorgenommen werden kann.

11. Verfahren nach einem der Ansprüche 8 bis 10, **dadurch gekennzeichnet, dass** die Längsabschnitte (60, 70) der Versorgungsstruktur (1) jeweils nacheinander durch eine Türöffnung (33) im Bereich des Turmbodens in den Turm (T) eingebracht werden.

12. Verfahren nach einem der Ansprüche 8 bis 11, **dadurch gekennzeichnet, dass** nach Fertigstellung der aus den miteinander verbundenen Längsabschnitten (60, 70) gebildeten Versorgungsstruktur (1) und nach dem finalen Anheben derselben das obere Ende (63) des ersten Längsabschnitts (60) der Versorgungsstruktur (1) mit einer Anschlagstruktur (15) an dem oberen Ende des Turmabschnitts dreh- und kippfest verbunden wird.

13. Verfahren nach einem der Ansprüche 8 bis 12, **dadurch gekennzeichnet, dass** die fertig aus den mit einander verbundenen Längsabschnitten (60, 70) gebildete Versorgungsstruktur (1) nach dem finalen Anheben mit an den Innenwänden der Turmabschnitte festgelegten Stützstreben (110) an der Turminnenwand abgestützt wird.

14. Verfahren nach einem der Ansprüche 8 bis 13, **dadurch gekennzeichnet, dass** die Versorgungsstruktur (1) ein, insbesondere rohrförmig gebildetes, Trägerelement (2) und ein mit diesem Trägerelement (2) verbundenes Leiterelement (4) umfasst, wobei die Längsabschnitte (60, 70) jeweils einen Trägerelementabschnitt (61, 71) sowie einen Leiterelementabschnitt (62, 72) umfassen.

15. Verfahren nach einem der Ansprüche 8 bis 14, **dadurch gekennzeichnet, dass** nach Fertigstellung der aus den miteinander verbundenen Längsabschnitten (60, 70) gebildeten Versorgungsstruktur (1) und nach dem finalen Anheben derselben sowie einem abschließenden Fixieren der Versorgungsstruktur (1) an der Versorgungsstruktur ein Liftsystem (LS) installiert wird.
